# EUROPEAN PATENT APPLICATION

(11) **EP 1 881 245 A1**
(43) Date of publication of application: **23.01.2008**
(21) Application number: 07011604.1
(22) Date of filing: 13.06.2007
(51) Int. Cl.: F16K 11/078, F16K 27/04

(54) **Mixing faucet with ceramic disks for hygienic-sanitary systems**

(30) Priority: 21.07.2006 IT MI20061431
(71) Applicant: Carlo Nobili S.p.A. Rubinetterie, 28021 Borgomanero (Prov. of Novara) (IT)
(72) Inventor: Nobili, Alberto, 28021 Borgomanero (Prov. of Novara) (IT)
(74) Representative: Alagem Modiano, Lara S.

(57) **Abstract**

A mixing faucet (1) with ceramic disks for hygienic-sanitary systems comprises a faucet body (2) inside which a cavity (3) is defined which is delimited, at the bottom, by the base (2a) of the faucet body (2) and accommodates a mixing cartridge (4) with ceramic disks. The faucet body (2) has a port (5) for dispensing the mixed water and supports a lever (6) for actuating the mixing cartridge (4) which can be actuated in order to vary the ratio between the delivered flow rates of hot and cold water. The mixing faucet comprises an enclosure (7) made of synthetic material which is arranged in the cavity (3) and accommodates the mixing cartridge (4). The enclosure (7) is provided with a footing (8) which rests on the bottom of the cavity (3) and has two passages (9, 10) with inlets located at two ports (11, 12) defined in the base of the faucet body (2) and with outlets connected to the intake ports of the mixing cartridge (4). These passages can be coupled hermetically to end portions (13a, 14a) of ducts (13, 14) for feeding hot and cold water which can be inserted in the passages (9, 10) through the two ports defined in the base (2a) of the faucet body (2).

## Description

The present invention relates to a mixing faucet with ceramic disks for hygienic-sanitary systems.

As is known, mixing faucets which use mixing cartridges with ceramic disks are constituted generally by a faucet body inside which there is a cavity which accommodates the mixing cartridge with ceramic disks, which is constituted generally by an enclosure made of synthetic material which contains the ceramic plates by means of which the hot water and cold water that enter the faucet are mixed.

More particularly, mixing cartridges with ceramic disks generally comprise, within the enclosure made of synthetic material, a fixed ceramic plate, which is locked on the bottom of the enclosure and is crossed by at least two intake ports which are aligned with corresponding intake ports defined in the bottom of the enclosure. Above the fixed ceramic plate there is a movable ceramic plate, in which there is a mixing cavity which, by way of the movement of the movable ceramic plate with respect to the fixed ceramic plate, can be made to overlap the intake ports defined in the fixed plate so as to produce, within said mixing cavity, the mixing of the hot water and cold water that arrive from the intake ports.

By moving the movable ceramic plate with respect to the fixed ceramic plate, it is possible to vary the passage sections of the intake ports which are connected to the mixing cavity so as to vary the ratio between the flow rate of hot water and the flow rate of cold water introduced in the mixing cavity, thus varying the temperature of the mixed water. The mixing cavity is connected to the delivery outlet of the faucet directly or by means of a third port or discharge port, which is again defined in the fixed ceramic plate in alignment with a discharge port which is defined in the bottom of the enclosure and is connected to the delivery outlet of the faucet by means of a duct which lies inside the faucet body.

The enclosure of the mixing cartridge supports an actuation lever, which is connected to the movable ceramic plate and is connected to an actuation lever which is supported by the body of the faucet and by means of which it is possible to act on the movable ceramic plate so as to vary the temperature of the delivered water, as explained above, or interrupt the connection between the intake ports and the delivery outlet of the faucet.

These kinds of faucets have two passages which are defined within the faucet body and have an inlet at the base of the faucet, which is connected to a corresponding duct for supplying hot or cold water, and an outlet which is defined in the bottom of the cavity that accommodates the mixing cartridge.

The mixing cartridge is arranged within the cavity of the faucet body by resting the base of its enclosure against the bottom of said cavity so that the two intake ports defined in the base of the enclosure are aligned with the outlet of the two passages cited above. The hydraulic seal between the enclosure of the mixing cartridge and the bottom of the cavity is achieved generally by means of gaskets which are interposed between the enclosure of the mixing cartridge and the bottom of the cavity of the faucet body and surround the intake ports.

Similar gaskets are generally provided between the fixed ceramic plate and the bottom of the enclosure.

Generally, quality faucets are provided with a body made of brass which is subjected to appropriate treatments and very often to chromium plating on its outer surface so as to achieve the required aesthetic effect.

Faucets of this kind have a particularly appreciated styling which arises mainly from the material used, i.e., brass.

This material, while having good mechanical strength, excellent machinability which allows to obtain precision mechanical couplings, suffers the drawback of having a relatively high cost, which in recent years has increased significantly. Moreover, brass, in the particular use to provide faucets, requires particular treatments, such as for example galvanic treatments, which require appropriately provided systems and cause problems as regards the disposal of the chemical substances that are used. Moreover, in some countries the brass used to provide faucets must comply with specific standards as regards its composition in order to be able to meet hygienic standards which regulate the use of water for food use.

In order to solve these problems, faucets have been proposed which have a body made of plastics which is compatible with food uses, but the results, particularly as regards the aesthetic appearance of the faucets, have not been fully satisfactory. In particular, chromium plating of plastics is generally unable to reach the quality that can be achieved with chromium plating of brass.

On the other hand, resorting to other less valuable metallic alloys as a replacement of brass, such as for example Zn + Al + Mg alloy, as a consequence of the difficult machinability of these materials can cause problems as regards the hydraulic tightness of the coupling among the several components of the faucet.

In particular, the provision of the body of a mixing faucet with ceramic disks of the traditional type but made of Zn + Al + Mg alloy would entail problems as regards the seal between the bottom wall of the enclosure of the mixing cartridge and the bottom of the cavity of the faucet body inside which the mixing cartridge is to be accommodated, due to the difficulty in machining precisely the bottom of the cavity.

The aim of the present invention is to solve the problems described above by providing a mixing faucet with ceramic disks for hygienic-sanitary systems whose body can be made of metallic alloys which are an alternative to brass, without problems as regards the hydraulic seal among the components of the faucet and as regards its functionality.

Within this aim, an object of the invention is to provide a faucet which is structured so as to limit as much as possible contact of the water with the faucet body.

Another object of the invention is to provide a faucet which can have a styling which is comparable with the styling of traditional brass faucets.

This aim and these and other objects, which will become better apparent hereinafter, are achieved by a mixing faucet with ceramic disks for hygienic-sanitary systems, comprising a faucet body inside which a cavity is defined which is delimited, at the bottom, by the base of the faucet body and accommodates a mixing cartridge with ceramic disks, said faucet body having a port for dispensing the mixed water and supporting a lever for actuating the mixing cartridge which can be actuated in order to vary the ratio between the delivered flow rates of hot and cold water, characterized in that it comprises an enclosure made of synthetic material which is arranged in said cavity and accommodates said mixing cartridge, said enclosure being provided with a footing which rests on the bottom of said cavity and has two passages with inlets located at two ports defined in the base of said faucet body and with outlets connected to the intake ports of said mixing cartridge, said passages being hermetically associable with end portions of ducts for feeding hot and cold water which can be inserted in said passages through said two ports defined in the base of the faucet body.

Further characteristics and advantages of the invention will become better apparent from the description of a preferred but not exclusive embodiment of the mixing faucet according to the invention, illustrated by way of non-limiting example in the accompanying drawings, wherein:

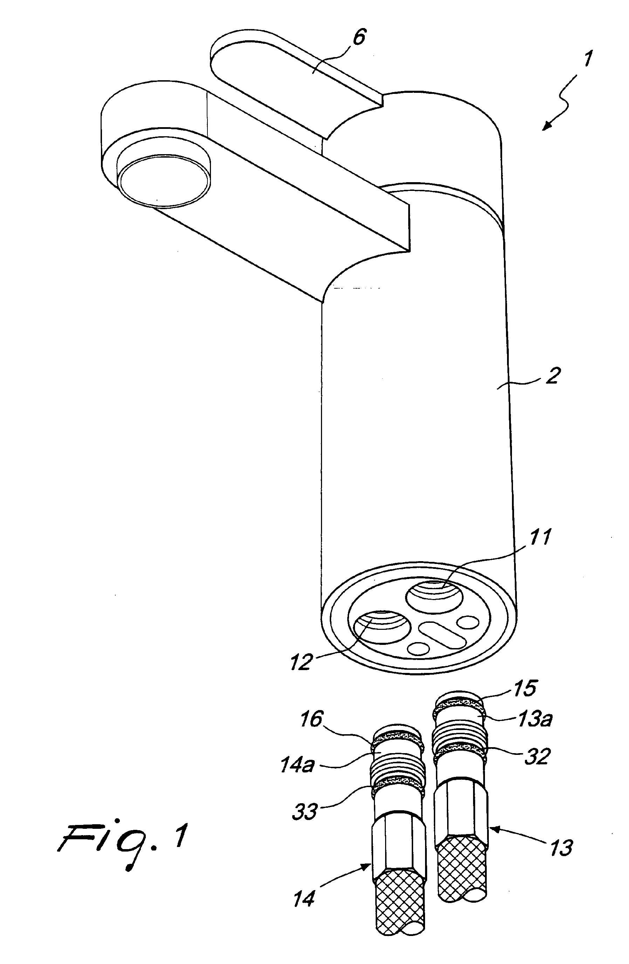

Figure 1 is a perspective view of the body of a mixing faucet according to the invention, illustrating in an exploded view the ducts for feeding hot and cold water;

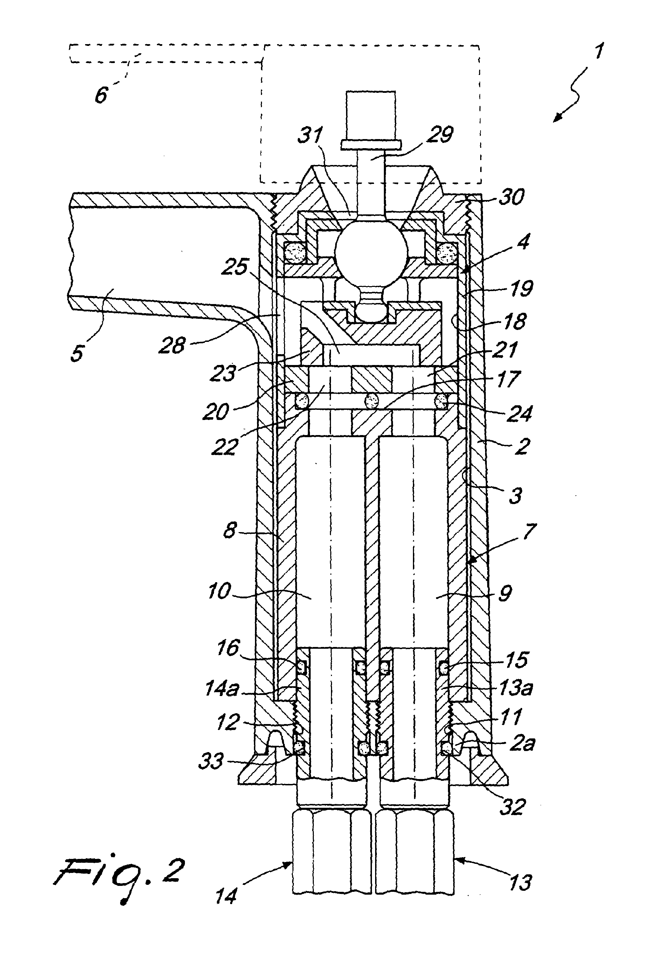

Figure 2 is a view of a mixing faucet according to the invention, with the faucet body shown in an axial cross-section.

With reference to the figures, the mixing faucet according to the invention, generally designated by the reference numeral 1, comprises a faucet body 2 in which there is a cavity 3 which is delimited, on its bottom, by the base 2a of the faucet body 2 and accommodates a mixing cartridge with ceramic disks, generally designated by the reference numeral 4, which can be constituted by a conventional mixing cartridge with ceramic disks.

The faucet body 2 comprises a delivery port or outlet 5 for the mixed water and supports an actuation lever 6 which can be actuated so as to act on the mixing cartridge 4 so as to vary the ratio between the hot water flow rate and the cold water flow rate being dispensed, in a manner similar to mixing faucets with ceramic disks of the traditional type.

According to the invention, the mixing faucet comprises an enclosure 7 made of synthetic material, which is arranged in the cavity 3 and accommodates the mixing cartridge 4. The enclosure 7 is provided with a footing 8 which rests against the bottom of the cavity 3 and in which there are two passages 9, 10 with inlets arranged at two ports 11, 12 which pass through the base 2a of the faucet body 2 and with outlets which are connected to the intake ports of the mixing cartridge 4. The passages 9 and 10 can be coupled hermetically to end portions 13a, 14a of ducts 13, 14 for supplying hot and cold water, which can be inserted in the passages 9, 10 through the ports 11 and 12 defined in the base 2a of the faucet body 2.

Advantageously, the passages 9 and 10 can engage sealing gaskets 15, 16, which are interposed between the lateral surface of the passages 9 and 10 and the end portions 13a, 14a of the supply ducts 13, 14. More precisely, the sealing gaskets 15, 16 are accommodated partially within circumferential seats which lie on the outer lateral surface of the end portions 13a, 14a of the supply ducts 13, 14 inserted in the passages 9, 10.

The footing 8 defines, with its upper face, i.e., with its face that lies opposite the one that rests on the bottom of the cavity 3, a contact surface 17 for the base of the mixing cartridge 4. The outlets of the passages 9 and 10 are defined in this contact surface and are connected hermetically to the intake ports of the mixing cartridge 4 which rests on the contact surface 17.

Preferably, the enclosure 7 is made of synthetic material which is compatible with food uses.

The enclosure 7 is substantially cylindrical and the passages 9 and 10 are substantially straight and parallel with respect to the axis of the enclosure 7.

The mixing cartridge 4 is accommodated in a chamber 18 which is defined in the enclosure 7 and is delimited, on one side or lower side, by the footing 8 and, on the other sides, by a lid 19 which is connected to the footing 8. The mixing cartridge 4 might not have the enclosure with which mixing cartridges of the known type are usually provided, since the function of containing the elements that compose the mixing cartridge 4 can be performed by the enclosure 7. More particularly, the mixing cartridge 4 can be composed of a fixed ceramic plate 20 which rests on the upper side of the footing 8 and is crossed by two intake ports, respectively an intake port 21 for hot water and an intake port 22 for cold water, and by a movable ceramic plate 23, which rests above the fixed ceramic plate 20.

Appropriately provided sealing gaskets 24 are arranged between the fixed ceramic plate 20 and the contact surface 17 defined by the upper side of the footing 8, around the intake ports 21 and 22, and provide a hydraulic seal in the connection between the intake ports 21 and 22 of the fixed ceramic plate 20 and the outlet of the passages 9 and 10, which are aligned with said intake ports 21 and 22.

A mixing cavity 25 is defined in the face of the movable ceramic plate 23 that is directed toward the fixed ceramic plate 20, and by way of the movement of the movable ceramic plate 23 with respect to the fixed ceramic plate 20, as in conventional mixing cartridges with ceramic disks, can be moved so as to be superimposed on the intake ports 21 and 22 with the possibility to vary the passage sections for the water from the intake ports 21, 22 to the mixing cavity 25 so as to be able to vary the temperature of the delivered water in a per se known manner.

The mixing cavity 25 is connected to the delivery port or outlet 5 by means of an exit opening which is defined in said movable ceramic plate 23 and by means of at least one lateral opening 28 defined in the lid 19.

The movable ceramic plate 23 is connected to an actuation lever 29, which protrudes from the faucet body 2 and is connected to the actuation lever 6, as will become better apparent hereinafter.

The enclosure 7 is locked inside the cavity 3 by a ring 30, which is screwed onto the end of the cavity 3 that lies opposite the base of the faucet body 2 and engages the upper side of the lid 19.

In the upper side of the lid 19 there is an opening 31 through which the actuation lever 29 protrudes from the faucet body 2, passing through the ring 30 and engaging the actuation lever 6.

Conveniently, the ports 11, 12 defined in the base 2a of the faucet body 2 are threaded along at least part of their axial extension and can engage corresponding threaded regions provided on the supply ducts 13 and 14 proximate to the end portions 13a, 14a which can be inserted in the passages 9, 10.

Advantageously, the ports 11, 12 defined in the base 2a of the faucet body 2 can engage sealing gaskets 32, 33 which are partially accommodated in circumferential seats defined in the outer lateral surface of the supply ducts 13, 14 and engage the lateral surface of the ports 11, 12.

The supply ducts 13, 14 are constituted preferably by flexible connecting hoses.

In practice it has been found that the mixing faucet according to the invention fully achieves the intended aim, since the enclosure made of synthetic material, preferably made of a synthetic material which is compatible with food uses, which contains the mixing cartridge and provides the hydraulically hermetic connection of the mixing cartridge to the hot and cold water supply ducts, thus avoiding the involvement of the faucet body in providing the seal, allows to provide the faucet body even with metallic alloys, such as for example Zn + Al + Mg alloy, which are difficult to machine with precision but ensure an aesthetic result which is comparable with the result that can be obtained by using brass.

The mixing faucet thus conceived is susceptible of numerous modifications and variations, all of which are within the scope of the appended claims; all the details may further be replaced with other technically equivalent elements.

In practice, the materials used, unless otherwise specified above, as well as the dimensions, may be any according to requirements and to the state of the art.

The disclosures in Italian Patent Application No. MI2006A001431 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A mixing faucet with ceramic disks for hygienic-sanitary systems, comprising a faucet body inside which a cavity is defined which is delimited, at the bottom, by the base of the faucet body and accommodates a mixing cartridge with ceramic disks, said faucet body having a port for dispensing the mixed water and supporting a lever for actuating the mixing cartridge which can be actuated in order to vary the ratio between the delivered flow rates of hot and cold water, **characterized in that** it comprises an enclosure made of synthetic material which is arranged in said cavity and accommodates said mixing cartridge, said enclosure being provided with a footing which rests on the bottom of said cavity and has two passages with inlets located at two ports defined in the base of said faucet body and with outlets connected to the intake ports of said mixing cartridge, said passages being hermetically associable with end portions of ducts for feeding hot and cold water which can be inserted in said passages through said two ports defined in the base of the faucet body.

2. The mixing faucet according to claim 1, **characterized in that** said passages can be engaged with sealing gaskets which are interposed between the lateral surface of said passages and said end portions of the hot and cold water supply ducts.

3. The mixing faucet according to claim 1, **characterized in that** said footing defines, with its face which lies opposite the face that rests against the bottom of said cavity, a contact surface for said mixing cartridge, the outlets of said two passages being defined in said contact surface and being connected hermetically to the intake ports of the mixing cartridge that rests against said contact surface.

4. The mixing faucet according to one or more of the preceding claims, **characterized in that** said enclosure is made of a synthetic material which is compatible with food uses.

5. The mixing faucet according to one or more of the preceding claims, **characterized in that** said enclosure is substantially cylindrical.

6. The mixing faucet according to one or more of the preceding claims, **characterized in that** said passages are substantially rectilinear and are oriented parallel to the axis of said enclosure.

7. The mixing faucet according to one or more of the preceding claims, **characterized in that** said enclosure has at least one exit opening which connects the discharge port of the mixing cartridge to the delivery port.

8. The mixing faucet according to one or more of the preceding claims, **characterized in that** the mixing cartridge is accommodated in a chamber which is defined in said enclosure and is delimited on one side by said footing and on the other sides by a lid which is connected to said footing; said exit opening being defined in said lid.

9. The mixing faucet according to one or more of the preceding claims, **characterized in that** said two ports defined in the base of the faucet body are threaded along at least part of their axial extension and can engage corresponding threaded regions provided in said hot and cold water supply ducts proximate to the end portions which can be inserted in said passages.

10. The mixing faucet according to one or more of the preceding claims, **characterized in that** said ports defined in the base of the faucet body can engage sealing gaskets which are interposed between the lateral surface of said ports and the portions of the hot and cold water supply ducts that are inserted in said ports.

11. The mixing faucet according to one or more of the preceding claims, **characterized in that** said enclosure is locked in said cavity by a ring which is screwed onto the end of said cavity which lies opposite said base of the faucet body.

12. The mixing faucet according to one or more of the preceding claims, **characterized in that** the mixing cartridge is provided with an actuation lever which protrudes from the side of said enclosure that lies opposite the side that rests against the bottom of said cavity; said actuation lever passing through said ring and being connected to said actuation lever.

13. A device for containing and supporting mixing cartridges with ceramic disks in mixing faucets of the type comprising a faucet body inside which a cavity is defined which is delimited, on its bottom, by the base of the faucet body and accommodates a mixing cartridge with ceramic disks, said faucet body having a delivery outlet for the mixed water and supporting a lever for actuating the mixing cartridge which can be actuated in order to vary the ratio between the delivered hot and cold water flow rates, **characterized in that** it comprises an enclosure made of synthetic material which is arranged in said cavity and accommodates said mixing cartridge, said enclosure being provided with a footing which is designed to rest against the bottom of said cavity and in which two passages are defined with inlets which can be arranged at two ports defined in the base of said faucet body and with outlets which are connected to the intake ports of said mixing cartridge, said passages being associable hermetically with end portions of hot and cold water supply ducts which can be inserted in said passages through said two ports defined in the base of the faucet body.

14. The device according to claim 13, **characterized in that** said passages can engage sealing gaskets which are interposed between the lateral surface of said passages and said end portions of the hot and cold water supply ducts.

15. The device according to claim 13, **characterized in that** said footing defines, with its face that lies opposite the face designed to rest against the bottom of said cavity, a contact surface for said mixing cartridge, the outlets of said two passages being defined in said contact surface and being connected hermetically to the intake ports of the mixing cartridge which rests against said contact surface.

16. The device according to one or more of claims 13-15, **characterized in that** said enclosure is made of synthetic material compatible with food uses.

17. The device according to one or more of claims 13-16, **characterized in that** said enclosure is substantially cylindrical.

18. The device according to one or more of claims 13-17, **characterized in that** said passages have a substantially rectilinear shape and are oriented parallel to the axis of said enclosure.

19. The device according to one or more of claims 13-18, **characterized in that** said enclosure has at least one exit opening for connection of the discharge port of the cartridge to the delivery port of the faucet.

20. The device according to one or more of claims 13-19, **characterized in that** the mixing cartridge is accommodated in a chamber which is defined in said enclosure and is delimited on one side by said footing and on the other sides by a lid which is connected to said footing; said exit opening being defined in said lid.

21. The device according to one or more of claims 13-20, **characterized in that** in said lid, on the opposite side with respect to said footing, there is an opening which is crossed by the actuation lever of the mixing cartridge.
